Europäisches Patentamt

European Patent Office

Office européen des brevets

(11) Veröffentlichungsnummer: **0 000 122**

**A1**

(12) # EUROPÄISCHE PATENTANMELDUNG

(21) Anmeldenummer: **78100101.1**

(22) Anmeldetag: **06.06.78**

(51) Int. Cl.²: **G 01 N 21/46, B 01 L 11/00**

(30) Priorität: **15.06.77 DE 2726920**

(43) Veröffentlichungstag der Anmeldung:
**10.01.79 Patentblatt 79/1**

(84) Benannte Vertragsstaaten:
**CH DE GB**

(71) Anmelder: **Bayer Aktiengesellschaft,
Zentralbereich Patente, Marken und Lizenzen Bayerwerk,
D-5090 Leverkusen 1 (DE)**

(72) Erfinder: **Hartung, Horst,
Heymanstrasse 47,
D-5090 Leverkusen (DE)**

(54) **Ultrazentrifugenzelle für interferenzoptische Untersuchungen.**

(57) Werden in den Rotor einer Ultrazentrifuge für interferenzoptische Untersuchungen in gleichem Abstand vom
Drehpunkt mehrere Zellen eingebaut, muss damit jede Zelle
beobachtet werden kann, der Haupt strahl durch jede Zelle
von der Rotationsachse unterschiedlichen Abstand haben.
Die Auslenkung der Strahlen wird durch prismatisch
geschliffene Fenster (4 oder 5) bewirkt, die die Kammern zur
Aufnahme der zu untersuchenden Flüssigkeit oben und
unten begrenzen. Die schwer bearbeitbaren Zellenmittelstücke (2) aus Spezialwerkstoffen sind planparallel ausgebildet.

FIG. 1

FIG. 3

EP 0 000 122 A1

BAYER AKTIENGESELLSCHAFT
Zentralbereich
Patente, Marken und Lizenzen

5090 Leverkusen, Bayerwerk
Hö/kl

Ultrazentrifugenzelle

BEZEICHNUNG GEÄNDERT
siehe Titelseite

Die Erfindung richtet sich auf eine Ultrazentrifugenzelle für interferenzoptische Untersuchungen an Flüssigkeiten in Ultrazentrifugen mit einem Rotor zur Aufnahme mehrerer Ultrazentrifugenzellen, enthaltend ein Zellengehäuse mit einem Zellenmittelstück in Form einer planparallelen Scheibe mit zwei oder mehreren durchgehenden Kanälen, wobei diese Kanäle durch dichten Abschluß des Zellenmittelstücks mit Fenstern geeignete Kammern zur Aufnahme der zu untersuchenden Flüssigkeit bilden.

Analytische Ultrazentrifugen mit Interferenzoptik werden hauptsächlich zur Bestimmung des Molekulargewichts und der Molekulargewichtsverteilung von synthetischen Polymeren und von Biopolymeren in Flüssigkeiten aus dem Sedimentations-Diffusions-Gleichgewicht benötigt. Die Zeit bis zur Gleichgewichtseinstellung im Zentrifugalfeld kann 10 Stunden und mehr betragen. Wegen der relativ langen Versuchsdauer und des hohen Preises einer Ultrazentrifuge versucht

Le A 18 016

man, eine Ultrazentrifuge so zu betreiben, daß gleichzeitig mehrere Proben untersucht werden können. Man verwendet beispielsweise Ultrazentrifugenzellen mit mehreren Kammern, die in radialer Richtung zur Rotationsachse des Rotors angeordnet sind. Diese Bauweise ist aus Herstellungs- und geometrischen Gründen auf 2 oder 3 x 2 Kammern (Kanäle) begrenzt; die Erweiterung der Meßkapazität bleibt auf einen Faktor 3 beschränkt. Eine andere Möglichkeit, die Kapazität einer Ultrazentrifuge zu erweitern, besteht darin, daß man im Ultrazentrifugenrotor mehrere Möglichkeiten zur Aufnahme von Ultrazentrifugenzellen vorsieht. Aus geometrischen und Festigkeitsgründen können heute bis zu 8 Ultrazentrifugenzellen in gleichem Abstand von der Rotorachse von einem Rotor aufgenommen werden. Um jede Zelle einzeln beobachten zu können, sind in einer bekannten Ausführung die Zellenmittelstücke unterschiedlich prismatisch ausgebildet. Dadurch werden die durch die Zellen gehenden Lichtbündel verschieden weit von der Rotationsachse abgelenkt und die Bilder der einzelnen Zellen am Beobachtungsort getrennt. Molekulargewicht und Molekulargewichtsverteilung werden interferenzoptisch bestimmt (E. Knözinger, H. Renz, Chemiker-Zeitung 98 (1974) 194/202).

Ein besonderes Problem bei der Ultrazentrifugenzelle ist das Werkstoffproblem. Nur wenige Stoffe kommen aufgrund ihrer Festigkeit und Leichtigkeit als Zellenmittelstücke in Frage; neben Aluminium sind nur aluminium- und tierkohlegefülltes Epoxidharz und ein mit Trifluorchlorpolyäthylen beschichtetes Aluminium bekannt. Ein Zellenmittelstück aus Aluminium ist zwar auch für Untersuchungen bei höheren Temperaturen geeignet, jedoch muß der pH-Wert der zu untersuchenden Lösung bei 7 liegen. Mittelstücke aus gefülltem Epoxidharz (bekannt als filled epon[(R)]) sind in

Le A 18 016

- 3 -

einem pH-Bereich von 3 bis 10 beständig, jedoch unbeständig gegenüber den meisten organischen Lösungsmitteln. Mit Trifluorchlorpolyäthylen beschichtete Mittelstücke aus Aluminium (bekannt als Kel F$^{(R)}$) können aus bearbeitungstechnischen Gründen nicht prismatisch hergestellt werden.

Diese Aufgabe wird dadurch gelöst, daß die Fenster unterschiedlich prismatisch geschliffen sind, wobei die Prismenkante senkrecht auf dem Radiusvektor des Rotors zu dem betreffenden Ultrazentrifugenzellenmittelpunkt steht.

Der Neigungswinkel des Prismas übersteigt kaum 1$^{O}$ , da sonst die Interferenzmuster nicht mehr in das begrenzte Sichtfeld fallen würden. Die Fensterhalter müssen den prismatischen Fenstern nach Winkel und Neigungsrichtung angepaßt sein.

Von besonderem Vorteil der erfindungsgemäßen Vorrichtung ist, daß die Zellenmittelstücke nicht prismatisch sein müssen, also aus einem Stoff bestehen können, der nur zu planparallelen Zwischenstücken verarbeitet werden kann, und mit solchen Zellen trotzdem der Konzentrationsverlauf in jeder Zelle gemessen werden kann, auch wenn sie in einem Rotor mit mehreren Ultrazentrifugenzellen eingebaut sind. Die Zeitersparnis ist sehr erheblich, weil Flüssigkeiten, die bisher nur in Rotoren mit einer Meßzelle jetzt zusammen mit anderen Meßzellen in einem Rotor, der beispielsweise 4 oder 6 Zellen aufnehmen kann, untersucht

- 4 -

werden können. Besonders vorteilhaft ist die Verwendung eines mit 3 x 2 Kammern versehenen Mittelstückes, mit dem in einem Ultrazentrifugenlauf bis zu 15 Proben vermessen werden können. Ein weiterer wirtschaftlicher Vorteil entsteht bereits da, wo das prismatische Zellenmittelstück aus filled epon$^{(R)}$ durch ein planparalleles Zellenmittelstück aus mit KEL-F$^{(R)}$ beschichtetem Aluminium ersetzt wird, da die Haltbarkeit des Zellenmittelstückes aus Trifluorchloräthylenpolymer wesentlich größer ist.

Einen weiteren Vorteil bietet die Vereinheitlichung der Zellenmittelstücke. Planparallele Zellenmittelstücke können universell benutzt werden, während prismatische hautpsächlich in der Interferenzoptik Verwendung finden. Spezielle Fensterhalter sind für beide Fälle notwendig.

Die Erfindung ist beispielhaft in der Zeichnung dargestellt und im folgenden näher beschrieben. Es zeigen:

Figur 1 eine Ultrazentrifugenzelle für interferenzoptische Versuche.

Figur 2 ein Sechskanalmittelstück.

Figur 3 einen Ausschnitt aus dem Strahlengang am oberen prismatischen Fenster.

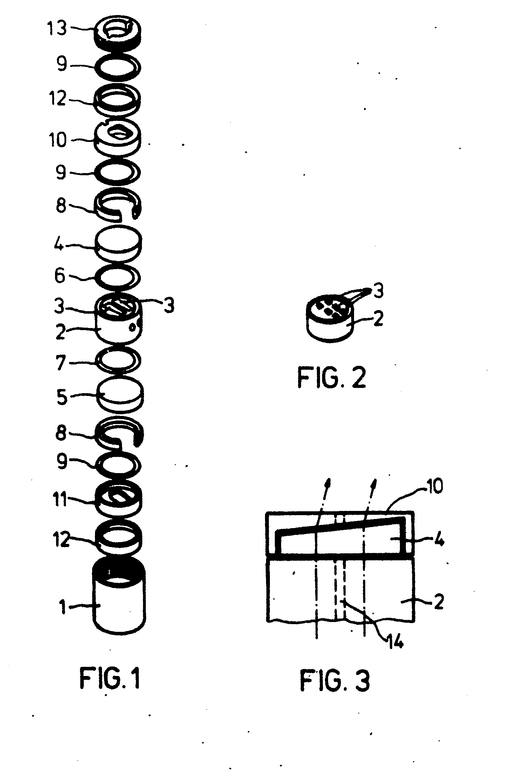

In Figur 1 sind die Einzelteile einer Ultrazentrifugenzelle übereinander gezeichnet, die in dem Zellengehäuse 1 sind.

Bei interferenzoptischen Untersuchungen muß das Zellenmittelstück 2 zweisektoral ausgebildet sein, damit die
Strahlen durch Probe und Referenzprobe kohärent sind.
Die Form der Kammer 3 im Zellenmittelstück 2 ist senkrecht zur Strahlenrichtung trapezförmig; jedoch weicht
die Form nur um wenige Grad von einem Rechteck ab. Die
Dicke des Zwischenstücks liegt üblicherweise zwischen
1 und 30 mm. Das Zellenmittelstück 2 ist eine planparallele Scheibe aus Trifluorchlorpolyäthylen in einer
Fassung mit 2 Kammern (Kanäle) 3. Die Kammern 3 im Zwischenstück 2 werden oben durch ein Fenster 4 aus Quarzglas und unten durch ein Fenster 5 aus Industriesaphir
begrenzt. Zur Abdichtung dienen Zwischenringe 6, 7 aus
Kunststoff. In der Figur 1 sind noch weitere Einzelteile
der Ultrazentrifugenzelle, wie Fensterfassungen 8, Dichtungen 9, oberer 10 und unterer 11 Fensterhalter, Abstandhalter 12 und Verschraubung 13 dargestellt.

Ein planparalleles 6-Kanalzellenmittelstück 2 ist in Figur 2 dargestellt. Jeder der beiden Sektoren ist in 3
Kanäle unterteilt. Der Rauminhalt beträgt ∼ 0,2 ml. Das
Zellenmittelstück wird in die Zentrifuge so eingebaut,
daß die Sektoren radial verlaufen.

Erfindungsgemäß ist vorzugsweise eines der Fenster 4, 5
nicht planparallel sondern prismatisch, wobei die Prismenkante senkrecht auf dem Radiusvektor des Rotors zu den
betreffenden Ultrazentrifugenzellenmittelpunkt steht.

<u>Le A 18 016</u>

- 6 -

Extrapoliert man die obere und untere Fensterfläche bis zur Schnittlinie, so beträgt der Winkel an der Prismenkante weniger als 1 Grad. Mit 2 Sorten prismatischer Fenster beispielsweise von 0,5° und 1° und mit planparallelen Fenstern kann man bereits 5 verschiedene Zellen aufbauen, so daß sich 5 in der Beobachtungsebene getrennte Beobachtungsfelder ergeben. Die Untersuchungszeit beträgt nur noch ein Fünftel.

Es besteht daneben aber grundsätzlich die Möglichkeit weiter, statt der 2-Sektor-Mittelstücke auch beispielsweise 6-Kanal-Zellenmittelstücke einzubauen. 6-Kanalzellen aus Kel-F $^{(R)}$ mit planparallelem Mittelstück sind bekannt. Die Meßkapazität wird durch Verwendung von 6-Kanalzellen bei einem Rotor, der mehrere Ultrazentrifugenzellen aufnehmen kann, noch einmal um einen Faktor 3 erhöht.

In Figur 3 ist der Strahlengang im Bereich des oberen Fensters schematisch dargestellt. Das Mittelstück 2 ist planparallel und besteht bevorzugt aus mit Trifluorchlorpolyäthylen-beschichtetem Aluminium. Das prismatisch ausgebildete obere Fenster 4 aus Quarzglas ist übertrieben stark geneigt. Der obere Fensterhalter 10 muß an das prismatische Fenster angepaßt sein. Die Rotorachse der Ultrazentrifuge liegt in der Zeichenebene parallel zur Führungsnut 14.

Le A 18 016

<u>Patentanspruch</u>

Ultrazentrifugenzelle für interferenzoptische Untersuchungen an Flüssigkeiten in Ultrazentrifugen mit
einem Rotor zur Aufnahme mehrerer Ultrazentrifugenzellen enthaltend ein Zellengehäuse mit einem Zellenmittelstück in Form einer planparallelen Scheibe mit
zwei oder mehreren durchgehenden Kanälen, wobei diese Kanäle durch dichten Abschluß des Zellenmittelstücks mit Fenstern geeignete Kammern zur Aufnahme
der zu untersuchenden Flüssigkeit bilden, dadurch gekennzeichnet, daß die Fenster (4) unterschiedlich prismatisch geschliffen sind, wobei die Prismenkante senkrecht auf dem Radiusvektor des Rotors zu dem betreffenden Ultrazentrifugenzellenmittelpunkt steht.

<u>Le A 18 016</u>

0000122

FIG.1

FIG. 2

FIG. 3

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.²) |
| --- | --- | --- | --- |
| A | US − A − 3 391 597 (L.GROPPER) <br> * Insgesamt * <br><br> −− <br><br> | | G 01 N 21/46 <br> B 01 L 11/00 |
| A | US − A − 3 937 581 (E.ROEDEL et al.) <br> * Spalten 3,4; Figur 2 * <br><br> −− <br><br> | | |
| A | US − A − 3 778 171 (C.CHERVENKA) <br> * Spalte 2; Figur 1 * <br><br> −−−− | | |

**RECHERCHIERTE SACHGEBIETE (Int. Cl.²)**

G 01 N 21/46
B 01 L 11/00
G 01 N 21/22

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
| --- | --- | --- |
| Den Haag | 22−09−1978 | BOEHM |